(19) Europäisches Patentamt
European Patent Office
Office européen des brevets

(11) EP 0 819 733 A2

(12) # EUROPÄISCHE PATENTANMELDUNG

(43) Veröffentlichungstag:
**21.01.1998 Patentblatt 1998/04**

(21) Anmeldenummer: **97111445.9**

(22) Anmeldetag: **07.07.1997**

(51) Int. Cl.[6]: **C08L 63/00**, C08G 59/18, C09D 163/00, C09J 163/00, C08G 59/28, C08G 59/50, C08G 59/56

(84) Benannte Vertragsstaaten:
**AT BE CH DE DK ES FI FR GB GR IE IT LI LU MC NL PT SE**

(30) Priorität: **15.07.1996 DE 19628409**

(71) Anmelder: **Vianova Resins GmbH**
**55252 Mainz-Kastel (DE)**

(72) Erfinder:
- **Marten, Manfred**
  **55126 Mainz (DE)**
- **Godau, Claus**
  **65399 Kiedrich (DE)**

(54) **Amin-modifizierte Epoxidharz-Zusammensetzung**

(57) Epoxidharz-Zusammensetzungen aus Polyepoxiden mit mindestens zwei 1,2-Epoxidgruppen, die erhältlich sind durch Umsetzung von Di- oder Polyepoxiden oder deren Mischungen mit Monoepoxiden und einem oder mehreren Aminen ausgewählt aus sterisch gehinderten Aminen, disekundären Diaminen und diprimären Diaminen, anschließender Umsetzung des Epoxid-Amin-Adduktes mit mehrfunktionellen Isocyanaten, gegebenenfalls Zusatz von weiteren 1,2-Epoxidverbindungen sowie Härtungsmitteln, und deren Verwendung als Beschichtung zur Rißüberbrückung, als Klebstoff und als Bestandteil von Lacken.

EP 0 819 733 A2

## Beschreibung

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen und Klebstoffen. Die mit Polyaminen gehärteten aromatischen Epoxidharze besitzen neben guter Chemikalien- und Lösungsmittelbeständigkeit eine gute Haftfestigkeit auf vielen Untergründen. Lösungsmittelfrei verarbeitbaren, möglichst niedrigviskosen Bisphenol-A-Epoxidharzen kommt u. a. eine erhebliche Bedeutung für den Schutz und die Sanierung von Betonbauwerken zu. Die Härtung der Epoxidharze kann bei Verwendung von Polyaminen bei Umgebungstemperatur erfolgen. Häufig ist die Anwendbarkeit der Epoxidharz/Polyamin-Systeme jedoch begrenzt durch eine unzureichende Elastizität bzw. Flexibilität im vernetzten Zustand. Für eine dauerhafte Rißüberbrückung werden, Beschichtungsstoffe gefordert, die aufgrund ihrer hohen Elastizität über dem Riß "arbeiten" und dabei große Temperaturwechselbelastungen durch eine hohe Dehnbarkeit auffangen können. Darüber hinaus werden auf dem Klebstoffsektor elastische Epoxidharz-Systeme benötigt, die noch bei tiefen Temperaturen (z. B. bis zu -20 °C) eine ausreichende Elastizität aufweisen.

Prinzipiell kann man zwar extern durch Weichmacherzusatz oder intern durch Verringerung der Vernetzungsdichte die Elastizität von Epoxidharz-Systemen erhöhen. Externe Elastifizierungsmittel sind jedoch nicht reaktiv und werden nicht in das Duromer-Netzwerk eingebaut. Als externe Weichmacher können Teer, Phthalsäureester, hochsiedende Alkohole, Ketonharze, Vinylpolymere und andere mit Epoxidharzen und Aminhärtern nicht reagierende Produkte eingesetzt werden. Diese Art der Modifizierung ist allerdings nur auf spezifische Anwendungsgebiete beschränkt, da sie eine Reihe von Nachteilen aufweist. So führen diese Zusätze zu einer starken Störung der Duromerstruktur, sind in ihrem Weichmachungseffekt zu tiefen Temperaturen hin begrenzt, neigen bei Temperaturbeanspruchung und Alterung zum Ausschwitzen und die gehärteten Systeme verspröden. Zur internen Erhöhung der Elastizität werden mit den Epoxidharzen oder Härtern reagierende Verbindungen zugesetzt, die in die Vernetzung mit einbezogen werden. Im einzelnen wird die elastifizierende Wirkung durch Einbau von langkettigen aliphatischen oder stark verzweigten Zusätzen in die Harz- oder Härterkomponente erreicht. Um die Harz-Härter-Systeme problemlos verarbeiten zu können, sollten die Ausgangskomponenten möglichst niedrige Viskositäten aufweisen.

Aus der US-A 3,538,039 sind heißhärtende Mischungen bekannt aus (1) einem Addukt eines Polyepoxids und Amin, (2) einem polyfunktionellen Anhydrid und (3) einem Beschleuniger für das Anhydrid. Das Addukt ist vorzugsweise aus einem Polyepoxid und aromatischen Aminen, wie Anilin, m-Aminophenol, m-Phenylendiamin, Methylendianilin, aufgebaut.

In der US-A 3,518,220 werden heißhärtbare Epoxidharz-Mischungen offenbart aus (1) einem Epoxygruppen-enthaltenden Addukt eines Polyepoxids mit im Mittel mehr als 1,0 vicinalen Epoxygruppen und einem aromatischen Amin mit mindestens zwei aktiven Wasserstoffen an Stickstoff und (2) 3-Aminopyridin. Als Amine werden Methylendianilin, Anilin, m-Aminophenol, m-Phenylendiamin u. a. verwendet.

Die DE-A 38 03 508 beschreibt ein kalthärtendes, warm nachvernetzbares Harz auf Epoxidbasis, erhältlich durch Umsetzung eines bifunktionellen Epoxids der allgemeinen Formel (3)

$$E - X - E \qquad (3)$$

worin

E jeweils einen Rest mit einer Epoxidfunktion bezeichnet und
X einen zweiwertigen organischen Rest bedeutet,

mit einem sekundären Diamin der allgemeinen Formel (4)

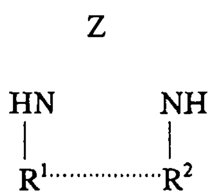

(4)

worin

$R^1$ und $R^2$ gleich oder verschieden sein können und jeweils Kohlenwasserstoffreste bedeuten, die unter Bildung eines Ringsystems miteinander verbunden sein können, und

Z ein zweiwertiger Kohlenwasserstoffrest ist.

Als Epoxidharz wird bevorzugt der Diglycidyläther des Bisphenol A und als Dialkylalkylendiamine z. B. N,N'-Dimethyläthylendiamin und N,N'-Diäthyläthylendiamin eingesetzt. Verwendet wird dieses Epoxidharz als Klebstoff, für Beschichtungen sowie als Matrixmasse.

In der EP-A 0 496 163 wird beschrieben
ein gehärtetes Epoxidharz enthaltend das Reaktionsprodukt aus:

A. einem Polyepoxid;
B. einem Kettenverlängerungsagens ausgewählt aus Verbindungen gemäß den Formeln 1 und 2;

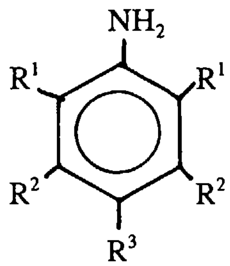

(1)

$$R^5 - NH - R^4 - NH - R^5 \quad (2)$$

C. gegebenenfalls einem Katalysator für die Reaktion zwischen Polyepoxid und Kettenverlängerungsmittel; und
D. gegebenenfalls einer Dihydroxy-Kohlenwasserstoffverbindung, die auch Halogensubstituenten enthalten kann; wobei

$R^1$, $R^2$ und $R^3$ unabhängig voneinander jeweils Wasserstoff oder einen Substituenten bedeuten, der nicht wesentlich die Reaktion zwischen den primären Aminen und Epoxidgruppen beeinflußt, und der nicht die Reaktion zwischen Epoxygruppen untereinander katalysiert; $R^4$ ist eine $C_{1-20}$-Alkylen-, $C_{5-20}$-Cycloalkylen-, oder $C_{6-20}$-Arylen-Gruppe, wobei diese Gruppen gegebenenfalls mit nicht beeinflussenden weiteren Gruppen substituiert sein können; und $R^5$ ist unabhängig voneinander jeweils eine $C_{3-20}$-sekundäre oder tertiäre Alkyl-, eine $C_{5-20}$-Cycloalkyl- oder $C_{6-20}$-Aryl-Gruppe, wobei diese Gruppen gegebenenfalls mit nicht beeinflussenden weiteren Gruppen substituiert sein können; mit der Einschränkung, daß mindestens eine der Gruppen $R^1$ oder zwei der Gruppen $R^2$ und $R^3$ die Reaktion nicht beeinflussen dürfen.

Diese kettenverlängerten Epoxidfestharze werden u. a. für die Pulverbeschichtung eingesetzt. Sie zeichnen sich durch höhere Erweichungspunkte und höhere Schmelzpunkte bei höherem spezifischen Epoxidgruppen-Gehalt (SEG) (=niedrigerem Epoxidäquivalentgewicht) gegenüber den konventionell verlängerten Epoxidharzen aus. (Unter "Epoxidäquivalentgewicht" versteht sich die Molmasse der betreffenden Verbindung bezogen auf die Anzahl der Epoxygruppen, auch "EV-Wert" genannt. Der EV-Wert ist der Kehrwert des SEG.) Eine Ausführungsform betrifft die wäßrigen Dispersionen von Amin-verlängerten Epoxidharzen, bestehend aus

(i) dem Reaktionsprodukt aus

A. einem Polyepoxid;
B. einem Kettenverlängerungsmittel entsprechend einer der Formeln (1),( 2) (siehe oben) und (5);

$$R^{11} - NH_2 \quad (5)$$

C. gegebenenfalls einem Katalysator für die Reaktion zwischen Polyepoxid und Kettenverlängerungsmittel und
D. gegebenenfalls einer Dihydroxy-Kohlenwasserstoffverbindung, die auch Halogensubstituenten enthalten kann;

(ii) ein Dispergiermittel in ausreichender Menge, um die Zusammensetzung in Wasser zu dispergieren;
(iii) gegebenenfalls einen Lösungsvermittler; und
(iv) Wasser; wobei

$R^{11}$ eine lineare oder verzweigte, unsubstituierte oder hydroxysubstituierte $C_{4-20}$-Alkylgruppe ist.

Neben den bereits oben angeführten Aminen 1 und 2 als Komponente B werden für das in Wasser dispergierte Epoxidharz zusätzlich in der Komponente (i) B Verbindungen der Formel (17) $R^{11}$ -$NH_2$ eingesetzt. Genauere Angaben über die Art einer eventuellen Verzweigung des Restes $R^{11}$ sind aus der Patentschrift nicht zu entnehmen. In Beispiel 8 wird n-Hexylamin und in Beispiel 12 n-Octylamin als Kettenverlängerungsmittel eingesetzt.

Bei der wäßrigen Ausführungsform der Epoxidharze gemäß EP-A 0 496 163 handelt es sich um komplexe Mischungen, in denen Festharze als stabile Dispersionen in Wasser bereitgestellt werden sollen. Als Anwendungen für diese Dispersionen sind u. a. angegeben Beschichtungen für Umgebungstemperaturhärtung, in Papierlatex, in Zementdispersionen und in anderen wasserhaltigen Beschichtungen.

In der US-A 4,886,867 wird u. a. eine Methode beschrieben zur Herstellung difunktioneller Epoxidharze der Formel (6)

```
 O       OH                                              OH      O
/ \      |                                               |      / \
CH2CH-R--CH-CH2N(i-Pr)CH2CH2(OCH2CH2)x-N(iPr)CH2CH-R-CHCH2
```

$$CH_2CH\text{-}R\text{--}CH\text{-}CH_2N(i\text{-}Pr)CH_2CH_2(OCH_2CH_2)_x\text{-}N(iPr)CH_2CH\text{-}R\text{-}CHCH_2 \qquad (6)$$

worin R von einem Bisphenol-A-Diglycidyläther-Rest stammt und x = 2 bis ca. 10 ist, durch Umsetzung von überschüssigem Epoxidharz mit einem sekundären Isopropylamin-Derivat eines primären Polyoxyalkylendi- oder -triamins in Gegenwart von Aceton (iPr = iso-Propylrest).

Die Umsetzung der Aminkomponente mit dem Bisphenol-A-Epoxidharz ist kritisch. Um eine Gelbildung zu verhindern, muß bei der Herstellung des Adduktes ein Losungsmittel zugesetzt werden. Geeignete Lösungsmittel sind Ketone und Alkohole, besonders bevorzugt ist Aceton. Die difunktionellen Epoxidharze können in Abhängigkeit vom Ausgangsmaterial fest oder flüssig sein und ergeben in gehärtetem Zustand ein transparentes, flexibles, gummiartiges Material. Aus den Beispielen ist zu entnehmen, daß die Diepoxide auf Basis von Bisphenol A-Harz (®Epon 828) halbfeste Produkte und solche auf Basis von ®Eponex 151 (hydriertem ®Epon 828) zwar flüssig sind, aber sehr hohe Viskositäten aufweisen (vgl. Tabelle I S. 9/10).

Nach der US-A 4,316,003 wird ein Addukt zur Härtung von Epoxidharzen, insbesondere für wäßrige Systeme, erhalten, indem zunächst in einer 1. Stufe überschüssiges Epoxidharz mit einem primären Monoamin abreagiert und danach das erhaltene Epoxid in einer 2. Stufe mit einem Überschuß eines polyfunktionellen Amins zur Reaktion gebracht wird. Die Produkte der 1. Stufe werden in Gegenwart von Lösungsmittel hergestellt und in der 2. Stufe unmittelbar zu dem Aminhärter weiterverarbeitet. Aussagen zur Lagerstabilität und zur eventuellen Verwendung der Stufe 1 werden nicht gemacht.

Die nach EP-A 0 675 143 hergestellten Beschichtungen zeigen aber, insbesondere bei den hochelastischen Einstellungen, eine für viele Anwendungen noch nicht ausreichende Weiterreißfestigkeit.

Aufgabe der vorliegenden Erfindung ist es, reaktive, auf den verschiedensten Substraten gut haftende flexible Beschichtungen mit hoher Weiterreißfestigkeit und Klebstoffe bereitzustellen, die auch bei tiefen Temperaturen, d. h. von 0 °C und niedriger, z. B. bis -20 °C, noch eine hohe Elastizität aufweisen. Vorteilhaft ist, wenn die Epoxidharze solche Viskositäten aufweisen, die eine leichte Verarbeitung ohne zusätzlichen apparativen Aufwand ermöglichen. Besonders vorteilhaft sind Epoxidharze, die sehr niedrigviskos sind, d. h. die in ihren Viskositätswerten deutlich unter denen flüssiger Bisphenol-A-Epoxidharze liegen.

Es wurde nun überraschenderweise gefunden, daß aus Umsetzungsprodukten (A) von Epoxiden (A1) mit im Mittel mindestens zwei Epoxidgruppen pro Molekül, gegebenenfalls in Abmischung mit Monoepoxiden, ausgewählt aus aliphatischen (Polyoxyalkylenglykol-) Glycidyläthern (A11) und Glycidyläthern von Polyhydroxyaromaten (A12) und mindestens einem Amin (A2) ausgewählt aus der Gruppe von bestimmten sterisch gehinderten Monoaminen (A21) und/oder bestimmten disekundären Polyätheraminen (A22) sowie bestimmten diprimären Diaminen (A23) und nachfolgende Reaktion mit mehrfunktionellen, bevorzugt difunktionellen Isocyanaten (A3) niedrigviskose - und für den Fachmann besonders überraschend - lagerstabile Epoxidsysteme erhalten werden, die sich durch Härtung zu hervorragend tieftemperaturelastischen, rißüberbrückenden Beschichtungen mit hoher Weiterreißfestigkeit und Klebstoffen verarbeiten lassen.

Mit den erfindungsgemäßen festen Epoxiden (A), z. B. erhalten aus Bisphenol A- oder F-Glycidyläthern (A 12) und bestimmten sterisch gehinderten Monoaminen (A 21), lassen sich durch Abmischung mit den erfindungsgemäßen flüssigen Epoxiden (A) Produkte mit beliebigen Zwischenviskositäten einstellen.

Die Erfindung betrifft daher Epoxidharz-Zusammensetzungen herstellbar aus

(A) Verbindungen, die mindestens zwei 1,2-Epoxidgruppen enthalten, die Umsetzungsprodukte sind von Epoxidaminaddukten, erhalten durch Reaktion von

(A1) Verbindungen mit im Mittel mindestens zwei 1,2-Epoxidgruppen pro Molekül, gegebenenfalls in Abmischung mit Monoepoxiden, und

(A2) einem oder mehreren Aminen ausgewählt aus

(A21) sterisch gehinderten Monoaminen der Formel I

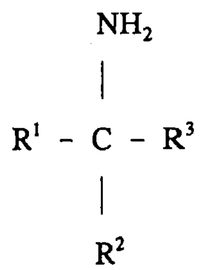

(I)

in der bedeuten

$R^1$ verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen,

$R^2$ und $R^3$ jeweils unabhängig voneinander Wasserstoff oder einen der unter $R^1$ genannten Reste, wobei für $R^3$ Wasserstoff besonders bevorzugt wird,

mit der Maßgabe, daß die Aminogruppe nicht direkt an einem Aromaten gebunden ist und für den Fall, daß $R^2$ und $R^3$ Wasserstoff sind, der verbleibende Rest $R^1$ einer der folgenden Substituenten ist

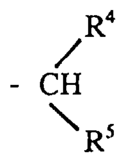

(7)

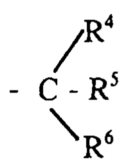

(8)

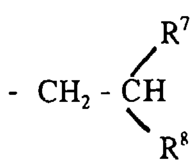

(9)

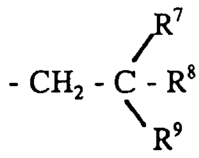

(10)

wobei die Reste

$R^4$ bis $R^9$ jeweils unabhängig voneinander die Bedeutung verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen haben, und

$R^1$ und $R^2$ einen gegebenenfalls substituierten cycloaliphatischen Ring mit bis zu 8 Kohlenstoffatomen bilden können, wobei $R^3$ dann ein Wasserstoffatom bedeutet, und

(A22) Aminen der Formel II

$$R^{11} - NH - R^{10} - NH - R^{11} \quad (II)$$

worin

$R^{10}$ ein aliphatischer, cycloaliphatischer oder araliphatischer, gegebenenfalls durch Hydroxyl-, Alkoxy- oder Halogen-Gruppen substituierter Kohlenwasserstoffrest mit 2 bis 30 Kohlenstoffatomen oder ein Oxyalkylenrest mit 1 bis 200 Oxyalkyleneinheiten und

$R^{11}$ jeweils unabhängig voneinander ein aliphatischer, cycloaliphatischer oder araliphatischer, gegebenenfalls durch Hydroxyl-, Alkoxy- oder Halogen-Gruppen substituierter Kohlenwasserstoffrest mit 1-20 Kohlenstoffatomen bedeuten,

mit der Maßgabe, daß mindestens ein direkt an das jeweilige Stickstoffatom gebundenes Kohlenwasserstoffatom ein sekundäres oder tertiäres ist, und

(A23) diprimären Diaminen der Formel III

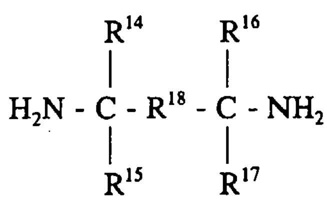

(III),

wobei

$R^{14}$ bis $R^{17}$ Wasserstoff oder eine Alkylgruppe mit 1 bis 8 Kohlenstoffatomen, und

$R^{18}$ eine direkte Bindung, eine lineare, verzweigte oder cyclische, gegebenenfalls substituierte Alkylengruppe oder eine Arylen- oder Heteroarylengruppe bedeuten,

mit der Maßgabe, daß mindestens einer der Reste $R^{14}$ bis $R^{17}$ eine Alkylgruppe ist, wenn $R^{18}$ eine direkte Bindung oder eine lineare Alkylengruppe ist; und $R^{14}$ mit $R^{16}$ oder $R^{18}$ und den verbindenden Atomen einen cycloaliphatischen, aromatischen oder heteroaromatischen Ring bilden können, und

mehrfunktionellen Isocyanaten (A3), die mindestens zwei Isocyanatgruppen pro Molekül enthalten, wobei der mit den Isocyanatgruppen verbundene mehrwertige Rest ausgewählt ist aus aromatischen, linearen, verzweigten oder cyclischen aliphatischen und aus gemischt aromatisch-aliphatischen Resten;

(B) gegebenenfalls 1,2-Epoxidverbindungen, die verschieden von denen gemäß (A1) sind und/oder die nicht umgesetzte Anteile der Verbindungen (A1) aus der Herstellung der Verbindungen (A) sind,

(C) Härtungsmitteln und

(D) gegebenenfalls weiteren Zusätzen.

Als Komponente (A1) kommen eine Vielzahl der hierfür bekannten Verbindungen in Betracht, die im Mittel mehr als eine Epoxidgruppe, vorzugsweise zwei Epoxidgruppen, pro Molekül enthalten. Es können jedoch auch Mischungen von Polyepoxiden mit Monoepoxiden eingesetzt werden. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen.

Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche.

Bevorzugt weisen die Verbindungen (A1) spezifische Epoxidgruppen-Gehalte ("SEG") von 2 000 bis 10 000 mmol/kg (Epoxidäquivalentgewichte von 100 bis 500 g/mol) auf.

Vorzugsweise handelt es sich dabei um solche Glycidyläther (A12), die sich von mehrwertigen Phenolen, insbesondere Bisphenolen sowie Novolaken ableiten und deren spezifische Epoxidgruppen-Gehalte 2 000 bis 10 000 mmol/kg, bevorzugt 4 000 bis 6700 mmol/kg (Epoxidäquivalentgewichte von 100 bis 500, insbesondere jedoch 150 bis 250 g/mol) betragen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-äthan, Bis-(4-hydroxyphenyl)-1,1-isobutan, Bis-(4-hydroxy-3-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen, wie beispielsweise Tetrabrombisphenol A. Ganz besonders bevorzugt werden flüssige Diglycidyläther auf Basis von Bisphenol A und Bisphenol F mit einem spezifischen Epoxidgruppen-Gehalt von 5200 bis 5600 mmol/kg (Epoxidäquivalentgewicht von 180 bis 190 g/mol).

Es können auch Polyglycidyläther (A11) von Polyalkoholen verwendet werden, wie z. B. Äthandiol-1,2-diglycidyläther, Propandiol-1,2-diglycidyläther, Propandiol-1,3-diglycidyläther, Butandiol-1,4-diglycidyläther, Pentandiol-1,5-diglycidyläther, Neopentylglykoldiglycidyläther, Hexandiol-1,6-diglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpoly(oxyäthylen-oxypropylen)glykoldiglycidyläther, Polyoxytetramethylenglykoldiglycidyläther, Polyglycidyläther des Glycerins, des 1,2,6-Hexantriols, Trimethylolpropans, Trimethyloläthans, Pentaerythrits, Sorbitols, Polyglycidyläther von oxalkylierten Polyolen (wie z. B. des Glycerins, Trimethylolpropans, Pentaerythrits), Diglycidyläther des Cyclohexandimethanols, Bis-(4-hydroxycyclohexyl)methans und 2,2-Bis-(4-hydroxycyclohexyl)propans, Polyglycidyläther des Rizinusöls, Triglycidyltris-(2-hydroxyäthyl)-isocyanurat. Ganz besonders bevorzugt werden Polyoxyalkylenglykoldiglycidyläther, und unter diesen Polyoxypropylenglykoldiglycidyläther mit einem spezifischen Epoxidgruppen-Gehalt von 1250 bis 6700, insbesondere von 2500 bis 3400 mmol/kg (Epoxidäquivalentgewicht von 150 bis 800, insbesondere von 300 bis 400 g/mol), eingesetzt.

In besonderen Fällen können zusätzlich zu den Polyglycidyläthern geringe Mengen reaktiver Verdünner (Monoepoxide) in Massenanteilen bis zu 30 %, vorzugsweise 10 bis 20 %, bezogen auf die Masse der Polyglycidyläther mitverwendet werden. Beispiele für geeignete Verbindungen sind Methylglycidyläther, Butylglycidyläther, Allylglycidyläther, Äthylhexylglycidyläther, langkettige aliphatische Glycidyläther, wie Cetylglycidyläther und Stearylglycidyläther, Monoglycidyläther eines höheren isomeren Alkoholgemisches, Glycidyläther einer Mischung von $C_{12}$- bis $C_{13}$-Alkoholen, Phenylglycidyläther, Kresylglycidyläther, p-t-Butylphenylglycidyläther, p-Octylphenylglycidyläther, p-Phenyl-phenylglycidyläther, Glycidyläther eines oxalkylierten Laurylalkohols sowie Monoepoxide wie epoxidierte einfach ungesättigte Kohlenwasserstoffe (Butylen-, Cyclohexen-, Styroloxid) und halogenhaltige Epoxide, wie Epichlorhydrin.

Weiterhin kommen in Frage Poly-(N-glycidyl)-Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)-methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung

von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester. Weiterhin seien genannt Glycidylester ungesättigter Carbonsäuren und epoxidierte Ester von ungesättigten Alkoholen bzw. ungesättigten Carbonsäuren.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee und Neville, "Handbook of Epoxy Resins", 1967, Chapter 2.

Es können auch Mischungen von mehreren Epoxidharzen verwendet werden.

Als sterisch gehinderte Monoamine (A21) können zur Herstellung der erfindungsgemäßen 1,2-Epoxidverbindungen beispielsweise eingesetzt werden t-Butylamin (2-Methyl-2-aminopropan), 2-Methyl-2-butylamin, t-Alkylamine der Rohm und Haas Company wie ®Primene TOA (t-Octylamin = 1,1,3,3-Tetramethylbutylamin), ®Primene 81 R (t-Alkylamine mit 12 bis 14 Kohlenstoffatomen), ®Primene JM-T (t-Alkylamine mit 16 bis 22 Kohlenstoffatomen), 2-Amino-2-methyl-1-propanol, 2-Amino-2-äthyl-1,3-propandiol, Tris(hydroxymethyl)aminomethan, Isopropylamin (2-Propanamin), sek. Butylamin (2-Aminobutan), 2-Amino-1-butanol, 3-Methyl-2-butylamin, 2-Pentylamin, 3-Pentylamin, Cyclopentylamin, 4-Methyl-2-pentylamin, Cyclohexylamin, 2-Heptylamin, 3-Heptylamin, 2-Methyl-cyclohexylamin, 3-Amino-2,4-dimethylpentan, 6-Methyl-2-aminoheptan, 1-Phenyl-äthylamin, 1-Methyl-3-phenylpropylamin, Cyclododecylamin, besonders bevorzugt sind 2-Aminobutan und Cyclohexylamin.

Weiterhin sind geeignet: Isobutylamin (2-Methyl-1-propanamin), 2-Methylbutylamin (1-Amino-2-methyl-butan), Isoamylamin (Isopentylamin = 1-Amino-3-methyl-butan), Furfurylamin, Benzylamin, 4-Methoxy-benzylamin, 2-Äthylhexylamin, Isononylamin (Gemisch isomerer Nonylamine, das zu ca. 90 % aus 3,5,5-Trimethylhexylamin besteht) u. a., besonders bevorzugt ist 2-Äthylhexylamin.

Bevorzugt werden Amine (A21) der Formel (15)

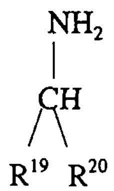

(15)

eingesetzt, wobei $R^{19}$und $R^{20}$ die Bedeutung von $R^1$ haben oder $R^{19}$ und $R^{20}$ einen gegebenenfalls substituierten cycloaliphatischen Ring mit bis zu 8 Kohlenstoffatomen bilden können.

Besonders bevorzugt werden als Amine (A21) t-Alkylamine mit 9 bis 22, insbesondere 12 bis 14 Kohlenstoffatomen.

Die Amine (A22) sind disekundäre Diamine, bei denen mindestens ein Stickstoffatom sterisch gehindert ist durch die Bindung an mindestens ein sekundäres oder tertiäres Kohlenstoffatom. Dabei kann die sterische Hinderung durch einen der Substituenten $R^{11}$ erfolgen, wie z.B. in N-Methyl-N'-isopropyläthylendiamin oder N-Methyl-N'-t-butyl-1,3-propandiamin. Die sterische Hinderung kann auch durch den Rest $R^{10}$ entstehen, wie z.B. bei N,N'-Diäthyl-1,2-propandiamin. Bevorzugt werden auch disekundäre Polyätherdiamine (Polyoxyalkylendiamine, besonders Polyoxyäthylendiamine) eingesetzt, entsprechende Produkte werden von der Condea Chemie GmbH unter der Bezeichnung ®Novamin vertrieben. Geeignet sind u. a. die sekundären Polyätheramine ®Novamin N 10 (mittlere Molmasse in g/mol: 390), N 20 (560), N 40 (2150) und N 50 (4150), besonders bevorzugt sind die sekundären Polyätherdiamine ®Novamin N 20 und ®Novamin N 40, sowie N,N'-Diisopropyl-1,3-propandiamin und N,N'-Di-t-butyläthylendiamin.

Als diprimäre Diamine (A23) eignen sich die aliphatischen verzweigten Diamine mit 5 bis 20 Kohlenstoffatomen, wie beispielsweise Neopentandiamin (1,3-Diamino-2,2-dimethylpropan), 1,2-Diamino-2-methylpropan, 1,2- und 1,4-Diaminocyclohexan, m-Xylylendiamin, 1,3-Bis(aminomethyl)cyclohexan, 1-Amino-2-aminomethyl-3,3,5-trimethylcyclopentan und dessen 3,5,5-Isomeres, Triacetondiamin, 1,8-Diamino-p-methan, Isophorondiamin (3-Aminomethyl-3,5,5-trimethylcyclohexylamin), 4,4'-Diaminodicyclohexylmethan, 3,3'-Dimethyl-4,4'-diaminodicyclohexylmethan, 3,8-Bis(aminomethyl)tricyclo[5.2.1.$0^{2,6}$]decan und dessen 4,9-Isomeres.

Es können auch Mischungen der Amine (A21), (A22) und (A23) benutzt werden.

Die Isocyanate (A3) sind die üblicherweise in der Polyurethanchemie verwendeten. Bevorzugt werden Diisocyanate, in einer anderen bevorzugten Form können auch Diisocyanate eingesetzt werden, bei denen ein Stoffmengenanteil von bis zu 15 %, bevorzugt bis zu 10 %, durch drei- oder höherfunktionelle Isocyanate ersetzt ist. Beispiele für

geeignete Polyisocyanate sind Trimethylendiisocyanat, Tetramethylendiisocyanat, Pentamethylendiisocyanat, Hexamethylendiisocyanat, 1,5-Diisocyanato-2-methylpentan, 1,12-Diisocyanatododecan, Propylendiisocyanat, Äthyläthylendiisocyanat, 2,3-Dimethyläthylendiisocyanat, 1-Methyltrimethylendiisccyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, 2,2-Bis-(4'-isocyanatocyclohexyl)propan, 4,4'-Diisocyanatodiphenyläther, 2,3-Bis-(8-isocyanatooctyl)-4-octyl-5-hexylcyclohexen, Tetramethylxylylendiisocyanat, Isocyanurate von obigen Diisocyanaten sowie Allophanate von obigen Diisocyanaten. Gemische solcher Polyisocyanate können ebenfalls eingesetzt werden. Besonders bevorzugt werden aromatische Isocyanate, insbesondere aromatische Diisocyanate.

Die erfindungsgemäßen Epoxidverbindungen (A) werden in der Weise hergestellt, daß zunächst die Epoxide (A1) mit den Aminen (A2) unter Rühren und im allgemeinen unter Erwärmen solange umgesetzt werden, bis der theoretisch berechnete spezifische Epoxidgruppen-Gehalt erreicht ist, d. h. bis alle aktiven Wasserstoffatome des Amins mit den im Überschuß vorhandenen Epoxidgruppen reagiert haben. Die Reaktionstemperaturen werden dabei im allgemeinen bei 25 bis 200 °C, vorzugsweise bei 50 bis 150 °C, insbesondere bei 60 bis 130 °C gehalten. Je nach Temperatur und eingesetzten Epoxiden und Aminen liegen die Reaktionszeiten allgemein zwischen wenigen Minuten und mehreren Stunden.

In den meisten Fällen sind keine zusätzlichen Katalysatoren zur quantitativen Umsetzung der Amine mit den Epoxiden notwendig. Vorteilhaft ist es, insbesondere bei niedrig siedenden Aminen, mit einem Überdruck z. B. bis 0,5 MPa (5 bar) zu arbeiten.

Bei der Herstellung der erfindungsgemäßen Epoxid-Amin-Addukte aus (A1) und (A2) können auch verschiedene Epoxide (A1) als Mischung eingesetzt und direkt mit den Aminen (A2) umgesetzt werden. Es kann aber auch ein gezielter, stufenweiser Aufbau mit verschiedenen Epoxiden nacheinander erfolgen der Art, daß zunächst ein Epoxid I (A1) mit einem Überschuß der Amine, z. B. 2 aktive Aminwasserstoffatome pro Epoxidgruppe und nach vollständiger Umsetzung der Epoxidgruppen des Epoxids I ein weiteres Epoxid II (A1) im Überschuß mit den noch verfügbaren aktiven Aminwasserstoffatomen zur Reaktion gebracht wird.

Auf entsprechende Weise können auch verschiedene Amine (A2) sowohl als Mischung als auch in einem stufenweisen Aufbau eingesetzt werden. In den jeweiligen Zwischenstufen mit Aminüberschuß ist es möglich, freies Restamin destillativ gegebenenfalls unter Vakuum zu entfernen. Es können auch beliebige Mischungen der erfindungsgemäßen Epoxide hergestellt werden, z. B. um bestimmte Verarbeitungsviskositäten und Eigenschaften der gehärteten Systeme zu erzielen.

In einem weiteren Reaktionsschritt werden die Epoxid-Amin-Addukte aus (A1) und (A2) mit den Isocyanaten (A3) umgesetzt.
Dies erfolgt in der Weise, daß die Epoxid-Amin-Addukte A1/A2 unter Rühren und Erwärmen mit den Isocyanaten (A3) solange umgesetzt werden, bis das Isocyanat vollständig abreagiert ist. Die Reaktionstemperaturen liegen dabei im allgemeinen bei 25 bis 120 °C, vorzugsweise bei 40 bis 100 °C, insbesondere bei 45 bis 80 °C. Je nach Temperatur und umgesetzten Rohstoffen liegen die Reaktionszeiten zwischen wenigen Minuten und mehreren Stunden.

Die Epoxidverbindungen (B) sind wie die Verbindungen gemäß (A1) ausgewählt aus der Gruppe der Polyepoxide mit mindestens zwei Epoxidgruppen pro Molekül. Gegebenenfalls können sie auch in Mischung mit Monoepoxiden verwendet werden. Sie sind im allgemeinen verschieden von den als (A1) eingesetzten Verbindungen. Unter die Verbindungen (B) zählen jedoch auch nicht umgesetzte Reste der Epoxidverbindungen (A1) aus der Herstellung der Epoxidharze (A).

Besonders bevorzugt wird eine Zusammensetzung aus (A1) Polyoxypropylenglykoldiglycidyläther, (A2) 2-Aminobutan, (A3) Toluylendiisocyanat und (B) Diglycidyläther von Bisphenol A oder Bisphenol F.

Als Komponente (C) können für ein Zweikomponenten-Epoxidharz alle bekannten Aminhärtungsmittel für 1,2-Epoxide eingesetzt werden. Beispielhaft seien genannt: aliphatische Amine, wie die Polyalkylenpolyamine, Diäthylentriamin und Triäthylentetramin, Tetraäthylenpentamin, Pentaäthylenhexamin, 2,2,4- und/oder 2,4,4-Trimethylhexamethylendiamin, Bis-(3-aminopropyl)-methylamin, 1,4-Bis(3-aminopropyl)-piperazin, N,N-Bis(3-aminopropyl)-äthylendiamin, 2-Methyl-pentandiamin (®Dytek A), Oxyalkylenpolyamine wie Polyoxypropylendi- und triamine und 1,13-Diamino-4,7,10-trioxatridecan, cycloaliphatische Amine, wie Isophorondiamin (3,5,5-Trimethyl-3-aminomethyl-cyclohexylamin), 4,4'-Diaminodicyclohexylmethan, 3,3'-Dimethyl-4,4'-diamino-dicyclohexylmethan, N-Cyclohexyl-1,3-propandiamin, Diaminocyclohexane, insbesondere 1,2-Diaminocyclohexan, 1,4-Diamino-3,6-diäthylcyclohexan, 1,2-Diamino-4-äthylcyclohexan, 1-Cyclohexyl-3,4-diaminocyclohexan, 2,2-Bis-(4-aminocyclohexyl)-propan, 1,3- und 1,4-Bis(aminomethyl)-cyclohexan, Piperazin, N-Aminoäthylpiperazin, TCD-Diamin (= 3(4), 8(9)-Bis(aminomethyl)-tricyclo[5.2.1.$0^{2,6}$]decan), araliphatische Amine, wie Xylylendiamine (m- und p-Xylylendiamin), aromatische Amine wie Phenylendiamine, 4,4'-Oxydianilin und 4,4'-Diaminodiphenylmethan.

Es können bevorzugt auch Mischungen dieser Amine eingesetzt werden, ebenso sind Mischungen von diesen Aminen und Phenylalkanolen wie zum Beispiel Benzylalkohol, Phenyläthanol, 3-Phenylpropanol sowie Phenoxyalkanolen wie 2-Phenoxyäthanol, 2- und 3-Phenoxypropanol geeignet; besonders bevorzugt sind Mischungen mit Benzylalkohol.

Weiterhin kommen in Betracht Addukthärter, die Umsetzungsprodukte von Epoxidverbindungen, insbesondere Glycidyläther des Bisphenol A und F, mit überschüssigen Aminen sind, beispielsweise Umsetzungsprodukte von Äthylendiamin, 2,2,4- und 2,4,4-Trimethylhexamethylendiamin, Isophorondiamin, 1,2-Diaminocyclohexan, m-Xylylendiamin und/oder Bis(aminomethyl-)cyclohexan mit endständigen Epoxiden, wie z. B. 1,2-Propylenoxid, 1,2-Hexenoxid oder mit Glycidyläthern wie Phenylglycidyläther, Äthylhexylglycidyläther, Butylglycidyläther oder mit Glycidylestern, wie ®Cardura E, oder Polyglycidyläthern bzw. -estern, wie sie bei (A1) beschrieben sind. Polyamidoamin- und Polyimidazolinhärter, die für vorliegende Zwecke verwendet werden können, werden durch Kondensation von Polyaminen und Polycarbonsäuren hergestellt, gegebenenfalls unter Zusatz von Monocarbonsäuren, insbesondere durch Kondensation von Polyalkylenpolyaminen mit polymeren Fettsäuren, erhalten durch katalytische Polymerisation von ein- oder mehrfach ungesättigten Fettsäuren oder durch Copolymerisation dieser Fettsäuren mit polymerisationsfähigen Verbindungen, wie z. B. Styrol.

Als Härter geeignete Mannich-Basen werden durch Kondensation von (primären) Polyaminen mit bevorzugt zwei primären Aminogruppen, die an aliphatische Kohlenstoffatome gebunden sind, vorzugsweise Diäthylentriamin, Triäthylentetramin, Isophorondiamin, 2,2,4- bzw. 2,4,4-Trimethylhexamethylendiamin, 1,3- und 1,4-Bis-(aminomethyl)cyclohexan, insbesondere m- und p-Xylylendiamin mit Aldehyden, vorzugsweise Formaldehyd und ein- oder mehrwertigen Phenolen mit mindestens einer aldehydreaktiven Kernstelle, z. B. die verschiedenen Kresole und Xylenole, p-tert.-Butylphenol, Resorcin, 4,4'-Dihydroxydiphenylmethan, 4,4'-Dihydroxydiphenyl-2,2-propan, vorzugsweise aber Phenol, hergestellt.

Besonders bevorzugt als Härtungsmittel sind Härter auf Basis von TCD-Diamin, Mannichbasen z. B. auf Basis von Phenol und/oder Resorcin, Formaldehyd und m-Xylylendiamin sowie N-Aminoäthylpiperazin und Abmischungen von N-Aminoäthylpiperazin mit Nonylphenol und/oder Benzylalkohol.

Die erfindungsgemäße Zusammensetzung kann neben den Komponenten (A), (B) und (C) noch weitere übliche Zusatzstoffe (D) enthalten wie beispielsweise Beschleuniger bzw. Härtungskatalysatoren, weitere Härter und zusätzliche härtbare Harze oder Extenderharze sowie die üblichen Lackadditive wie Pigmente, Pigmentpasten, Farbstoffe, Antioxidantien, Stabilisierungsmittel, Verlauf- bzw. Verdickungsmittel (Thixotropierungsmittel), Entschäumer und/oder Netzmittel, Reaktivverdünner, Füllstoffe, Weichmacher, flammhemmende Stoffe und dergleichen. Diese Additive können den härtbaren Mischungen gegebenenfalls längere Zeit vorher oder erst unmittelbar vor der Verarbeitung zugegeben werden.

Als Beschleuniger, insbesondere für die Härtung mit Aminhärtungsmitteln, können beispielsweise Phenole und Alkylphenole mit 1 bis 12 C-Atomen in der Alkylgruppe, Kresol, die verschiedenen Xylenole, Nonylphenol, Polyphenole wie Bisphenol A und F, OH-Gruppenhaltige aromatische Carbonsäuren wie Salicylsäure, m-Hydroxybenzoesäure, p-Hydroxybenzoesäure sowie tertiäre Amine, wie Benzyldimethylamin, 1,3,5-Tris(dimethylamino)phenol, Mischungen aus N-Aminoäthylpiperazin und Alkanolaminen (vgl. DE-A 29 41 727), ®Accelerator 399 (Texaco Chemical Company) und dergleichen eingesetzt werden.

Zusätzlich härtbare Harze im Sinne der Komponente (D) sind zum Beispiel Kohlenwasserstoffharze, Phenoxyharze, Phenolharze, Polyurethanharze, Polysulfide (®Thiokol), reaktive, flüssige Polymere des Butadiens bzw. entsprechende Acrylnitril/Butadien-Copolymere (®Hycar-Typen), während als übliche Extenderharze hier unter anderem nichtreaktive Epoxidharz-Modifizierungsmittel, Pine oil, Teere, Phthalsäureester und Cumaronöle genannt seien.

Als Verlaufmittel können zum Beispiel Acetale, wie Polyvinylformal, Polyvinylacetat, Polyvinylbutyral, Polyvinylacetobutyral u. a. Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente (A) in Massenanteilen von 0,1 bis 4 %, vorzugsweise 0,2 bis 2,0 %, bezogen auf die Gesamtmasse zugesetzt werden.

Als Haftvermittler und Hydrophobierungsmittel können u. a. Silane eingesetzt werden. Diese können sowohl mit dem anorganischen Untergrund als auch mit dem organischen Polymeren (Klebstoff, Beschichtungsmasse oder dgl.) unter Ausbildung von festen Bindungen reagieren. Durch die Haftverbesserung können die mechanischen Werte, insbesondere nach Feuchtigkeitsbeanspruchung, verbessert werden. Entsprechende Produkte werden z. B. unter der Bezeichnung ®Dynasylan von Hüls Aktiengesellschaft, bzw. als ®Silan von Degussa AG angeboten. Stabilisatoren sind z. B. aromatische Diketone wie Benzoin, die punktuelle Zersetzungen unterbinden und damit die Porenbildung herabdrücken. Diese werden im allgemeinen in Massenanteilen von 0,1 bis 3, vorzugsweise von 0,2 bis 2 %, bezogen auf die Masse des gesamten Bindemittels (Komponenten (A), (B) und (C)), eingesetzt.

Die Farbstoffe und Pigmente können sowohl anorganischer als auch organischer Natur sein. Beispielsweise seien genannt Titandioxid, Zinkoxid, Ruß, Leitfähigkeitsruß wie z. B. ®Printex XE 2 der Degussa AG. Die organischen Farbstoffe und Pigmente sind so auszuwählen, daß sie bei den Härtungstemperaturen stabil sind und zu keinen untolerierbaren Farbtonverschiebungen führen.

Geeignete Füllstoffe sind zum Beispiel Quarzmehl, Silikate, Kreide, Gips, Kaolin, Glimmer, Schwerspat, organische Füllstoffe wie z. B. Polyamidpulver, organische und anorganische Fasern und dergleichen. Als Thixotropier- und Verdickungsmittel können beispielsweise ®Aerosil (hochdisperses Siliciumdioxid z. B. die Typen 150, 200, R 202, R 805 der Degussa), Bentonit-Typen (z. B. ®Sylodex 24 von Grace, ®Bentone, NL Chemicals) verwendet werden.

Zur Herstellung der erfindungsgemäßen härtbaren Mischungen werden die Komponenten (A) und gegebenenfalls. (B) und (C) sowie gegebenenfalls zusätzlich (D) mit Hilfe geeigneter Aggregate (Rührer, Walzen) gemischt. Bei Komponenten mit niedriger Viskosität kann dies in Substanz erfolgen. Die Einarbeitung der Zusatz- und Füllstoffe erfolgt im allgemeinen mit Zwangsmischern, wie z. B. Dissolvern und Knetern. Auch hier kann es notwendig sein, durch eine Kühlung des formulierten erfindungsgemäßen Harz/Härter-Systems eine vorzeitige Reaktion der Komponenten zu vermeiden.

Die härtbaren Mischungen der Erfindung können in vielfältiger Weise verwendet werden, z. B. als Bestandteil von Lacken zum Beschichten der verschiedensten organischen und anorganischen Substrate, wie Metalle, Beton, Faserzement, Glas, Keramik, Gummi, Leder, Holz, Textilien, Kunststoffe, ferner zur Herstellung von dickschichtigen Bodenbeschichtungen und Zwischenbeschichtungen. Insbesondere eignen sich die erfindungsgemäßen Mischungen für Überzüge, Klebstoffe, Kitte, Dichtungsmassen und Formteile auf vielerlei Anwendungsgebieten, wo gute Haftung, hohe Schlag- und Stoßfestigkeit und verbesserte Flexibilität und Elastizität gefordert werden, wie z. B. auf dem Bausektor zu rißüberbrückenden Beschichtungen und Fugenausfüllungen sowie als Zusatz zu Kunststoffzementen.

Der Auftrag der Mischungen kann nach den üblichen Methoden erfolgen, wie Streichen, Sprühen, Rakeln, Tauchen, Gießen, Aufwalzen und Ablegen als Kleberaupe aus geeigneten Aggregaten. Die Überzüge werden dann üblicherweise bei Raumtemperatur oder gegebenenfalls bei erhöhten Temperaturen gehärtet.
Der spezifische Epoxidgruppengehalt *SEG* ist der Quotient aus der Stoffmenge an Epoxidgruppen *n*(EP) und der Masse *m* des Epoxids:

$$SEG = \frac{n(\mathrm{EP})}{m}$$

**Beispiele**

**Herstellung der Epoxidharze**

**Beispiel 1a (Vergleich, Beispiel 1 der EP-A 0 675 143)**

Zu 2040 g ®Beckopox EP 075 (Polyoxypropylenglykoldiglycidyläther, Vianova Resins GmbH) mit einem spezifischen Epoxidgruppen-Gehalt (SEG) von 2941 mmol/kg (Epoxidäquivalent (EV) von 340 g/mol) werden in einem Vierhalskolben mit Rührer, Thermometer und Kühler unter Stickstoff 110 g 2-Aminobutan gegeben. Das Reaktionsgemisch wird auf 60 °C erwärmt und zwei Stunden bei dieser Temperatur gehalten, dann wird langsam innerhalb von zwei Stunden auf 120 °C geheizt und vier Stunden gehalten. Das Reaktionsprodukt wird auf Raumtemperatur gekühlt. Der spezifische Epoxidgruppen-Gehalt beträgt 1466 mmol/kg (Epoxidäquivalent 682 g/mol) und die Viskosität bei 25 °C 405 mPas.

**Beispiel 1b (Vergleich, Harzmischung in Beispiel II.1, Tab. 3 der EP-A 0 675 143)**

Das Epoxidharz aus Beispiel 1a wird mit einem flüssigen Epoxidharz ®Beckopox EP 140 (Vianova Resins GmbH; SEG = 5525 mmol/kg, EV = 181 g/mol) im Massenverhältnis 50 % : 50 % abgemischt. Die Harzmischung hat einen spezifischen Epoxidgruppen-Gehalt von 3497 mmol/kg (Epoxidäquivalent von 286 g/mol).

**Beispiel 2a (erfindungsgemäß)**

970 g des Epoxidharzes aus Beispiel 1a mit einem spezifischen Epoxidgruppen-Gehalt von 1466 mmol/kg (Epoxidäquivalent von 682 g/mol) werden in einem Vierhalskolben mit Rührer, Thermometer und Kühler unter Stickstoff auf 50 °C erwärmt und innerhalb von 30 Minuten 30 g Toluylendiisocyanat zugetropft. Dabei steigt die Temperatur auf 56 °C an. Nach dem Abklingen der exothermen Reaktion wird noch 3 Stunden bei 50 °C gehalten. Der spezifische Epoxidgruppen-Gehalt beträgt 1422 mmol/kg (Epoxidäquivalent 703 g/mol) und die Viskosität bei 25 °C 1260 mPas.

**Beispiel 2b (erfindungsgemäß)**

Das modifizierte Epoxidharz aus Beispiel 2a wird mit einem flüssigen Epoxidharz Beckopox EP 140 (SEG = 5525 mmol/kg, EV = 181 g/mol) im Massenverhältnis 50 % : 50 % abgemischt. Die Harzmischung hat einen spezifischen Epoxidgruppen-Gehalt von 3472 mmol/g (Epoxidäquivalent von 288 g/mol).

Analog Beispiel 2a wird das Epoxidharz aus Beispiel 1a in unterschiedlichen Molverhältnissen mit Toluylendiisocyanat umgesetzt. Die weiteren erfindungsgemäßen Beispiele und Ergebnisse sind Tabelle 1 zu entnehmen.

In allen Fällen werden 50 %ige Abmischungen wie in Beispiel 2b mit dem flüssigen Epoxidharz Beckopox EP 140 (SEG = 5525 mmol/kg, EV = 181 g/mol) hergestellt (siehe Tabelle 2). Als Härter wurden die Aminhärter ®Beckopox Spezialhärter VEH 2841 und ®Beckopox-Spezialhärter EH 610, beide mit einem spezifischen Gehalt an aktiven Amin-Wasserstoffatomen von 10,53 mol/kg (sog. "Amin-Wasserstoff-Äquivalentgewicht" = molare Masse dividiert durch die Anzahl der aktiven Amin-Wasserstoffatome von 95 g/mol) eingesetzt.

Tabelle 1

| Beispiel | $\frac{n\ (EP)}{n\ (NCO)}$ | SEG mmol/kg | EV g/mol | Viskosität bei 25°C mPas |
|---|---|---|---|---|
| 1a | - | 1466 | 682 | 405 |
| 2a | 4:1,0 | 1422 | 703 | 1260 |
| 3a | 4:1,5 | 1399 | 715 | 2800 |
| 4a | 4:1,9 | 1383 | 723 | 6530 |
| 5a | 4:2,0 | 1377 | 726 | 8370 |
| n (EP) Stoffmenge Epoxidgruppen (in mol)<br>n (NCO) Stoffmenge Isocyanatgruppen (in mol) | | | | |

**Härter Beckopox-Spezialhärter VEH 2841**

Modifiziertes beschleunigtes Polyaminaddukt auf Basis m-Xylylendiamin; spezifischer Gehalt an Aminwasserstoffatomen 10,53 mol/kg [HAV 95 g/mol]

**Härter Beckopox-Spezialhärter EH 610**

Aliphatischer Polyaminhärter auf Basis Aminoäthylpiperazin spezifischer Gehalt an Aminwasserstoffatomen 10,53 mol/kg [HAV 95 g/mol]

**Beckopox EP 140**

Flüssiges Bisphenol A-Epoxidharz; SEG = 5525 mmol/kg [EV 181 g/mol]

Tabelle 2

| Bsp. | Massenanteil Epoxidharz in % | Massenanteil Epoxidharz aus Beispiel | Massenanteil Beckopox EP 140 in % | SEG mmol/kg | EV g/mol | g Härter VEH 2841 pro 100 g Harzmischung | Verarbeitungszeit bei 23°C in Minuten | Weiterreißfestigkeit in N/mm |
|---|---|---|---|---|---|---|---|---|
| 1b | 50 | 1a | 50 | 3500 | 286 | 33,2 | 75 | 14,9 |
| 2b | 50 | 2a | 50 | 3470 | 288 | 33,0 | 65 | 24,5 |
| 3b | 50 | 3a | 50 | 3460 | 289 | 32,9 | 59 | 28,4 |
| 4b | 50 | 4a | 50 | 3450 | 290 | 32,8 | 53 | 38,7 |
| 5b | 50 | 5a | 50 | 3450 | 290 | 32,8 | 53 | 38,2 |

### Bestimmung der Weiterreißfestigkeit

### Probenvorbereitung

Eine Kunststoffplatte 145 x 206 $mm^2$ wird an den Kanten senkrecht zur Fläche gegen Harzablauf mit Tesafilm umklebt. Das Harz-Härter-Gemisch wird entsprechend dem in Tabelle 2 angegebenen Mischungsverhältnis eingewogen, 3 bis 5 Minuten langsam mit einem Spatel verrührt (keine Luftblasen) und 50 g davon gleichmäßig auf der Platte verteilt. Es wird 7 Tage bei Raumtemperatur und anschließend 5 Stunden bei 60 °C ausgehärtet und nach dem vollständigen Erkalten der Formkörper von der Kunststoffunterlage abgezogen.

### Messung der Weiterreißfestigkeit

erfolgt nach Weiterreißversuch mit der Winkelprobe nach Graves mit Einschnitt DIN 53515 bei einer Vorschubgeschwindigkeit von 500 mm/min (wie in der Norm angegeben).

### Herstellung der Filme und Formkörper

(für Prüfung nach Tabelle 3)

Entsprechend den in Tabelle 2 angegebenen Mengenverhältnissen werden Harz und Härter gemischt, als 250 µm Schicht auf Glasplatten aufgetragen und wie in Tabelle 3 angegeben, geprüft.

Zur Beurteilung der Elastizität wird eine 2 bis 3 mm dicke Schicht auf Kunststoffplatten gegossen und diese 7 Tage bei Raumtemperatur und 5 Stunden bei 60 °C gehärtet. Die Beurteilung der Elastizität erfolgt manuell.

Tabelle 3

| **Beispiel** | | | **6 (Vgl.)** | **7** | **8** | **9** | **10 (Vgl.)** | **11** |
|---|---|---|---|---|---|---|---|---|
| Harz nach Beispiel | | | 1b | 2b | 3b | 5b | 1b | 3b |
| Härter | | | EH 610 | EH 610 | EH 610 | EH 610 | VEH 2841 | VEH 2841 |
| Temperatur | | | 25 | 25 | 25 | 25 | 22 | 22 |
| Verarbeitungszeit | | min | 30 | 30 | 24 | 17 | 95 | 75 |
| Trocknung (DIN 53150) | staubtrocken | Stunden | >8 <24 | 7 | 6 | 5,5 | 6,5 | 6,5 |
| | klebfrei | Stunden | >24 <48 | >8 <24 | >8 <24 | >8 <24 | >8 <24 | >8 <24 |
| Verlauf | | (+) | 1 | 1 | 1 | 1 | 1 | 1 |
| Filmtrübung | | (+) | 1 | 0 | 0 | 0 | 1-2 | 1 |
| Oberflächenkleber n. 24 h | | (+) | 1 | 0 | 0 | 0 | 0 | 0 |
| Pendelhärte (DIN 53157) | nach 24 h | s | 13 k | 18 | 24 | 25 | 12 | 16 |
| | nach 48 h | s | 21 | 24 | 31 | 32 | 15 | 23 |
| | nach 7 d | s | 29 | 29 | 36 | 35 | 15 | 29 |
| Wasserfestigkeit n. 24 h | | (+) | 2 | 0,5 | 0,5 | 0,5 | 1-2 | 0 |
| Heißwasserfestigkeit n. 7 d | | (+) | 0 | 0 | 0 | 0 | 0 | 0 |
| Formkörper: | | | | | | | | |
| Elastizität n. 7 d RT + 5 h 60 | | °C *) | 1 | 1 | 1-2 | 1-2 | 1 | 1-2 |

Anmerkungen:
(+) = Visuelle Beurteilung nach DIN 53230
k = klebt
*) = 1-weich elastisch, 2-zäh elastisch
Vgl. : Vergleich

**Beurteilung**

Die Ergebnisse der Filmprüfung (Tab. 3) zeigen, daß die erfindungsgemäßen Harze gegenüber den Vergleichen tendenziell besser, mindestens aber gleichwertig, ausfallen.

Die Verarbeitungszeit und die Trocknung werden deutlich verkürzt. Die Härte nimmt zu und die Wasserfestigkeit wird ebenfalls verbessert.

Die Viskosität der Harze (Tab. 1) erhöht sich zwangsläufig durch die Vernetzung der Epoxid-Amin-Addukte mit den Diisocyanaten, bewegt sich aber immer noch unterhalb der Viskosität des Standard-Epoxid-Flüssigharzes von ca. 10 000 mPas. Dies ist in Anbetracht des Zugewinns an positiven Eigenschaften immer noch als vorteilhaft anzusehen.

Die Lagerstabilitäten (Tab. 4) werden gegenüber dem Ausgangs- bzw. Vergleichsharz nicht verschlechtert (vgl. Beispiel 1a).

Insbesondere läßt sich durch die erfindungsgemäßen Harz-Härtersysteme die Weiterreißfestigkeit der Beschichtungen und Formkörper hervorragend verbessern (Tab. 2), ohne daß Verluste in den übrigen Eigenschaften eintreten.

Tabelle 4

| Lagerstabilität | | | | | |
|---|---|---|---|---|---|
| | | Veränderung gegenüber dem Ausgangswert in % | | | |
| Beispiel | nach Wochen | Raumtemperatur | | 50 °C | |
| | | SEG | Visk. 25 °C | SEG | Visk. 25 °C |
| 1 a (V) | 12 | n. gem. | n. gem.. | -6,2 | + 13,4 |
| 2 a | 13 | -0,3 | + 0,2 | -3,7 | + 9,2 |
| 2 b | 12 | 0 | 0 | -2,0 | + 9,0 |
| n. gem..: nicht gemessen<br>V Vergleich | | | | | |

**Patentansprüche**

1. Epoxidharz-Zusammensetzungen herstellbar aus

   (A) Verbindungen, die mindestens zwei 1,2-Epoxidgruppen enthalten, die Umsetzungsprodukte sind von Epoxidaminaddukten, erhalten durch Reaktion von

   (A1) Verbindungen mit im Mittel mindestens zwei 1,2-Epoxidgruppen pro Molekül, gegebenenfalls in Abmischung mit Monoepoxiden, und

   (A2) einem oder mehreren Aminen ausgewählt aus

   (A21) sterisch gehinderten Monoaminen der Formel I

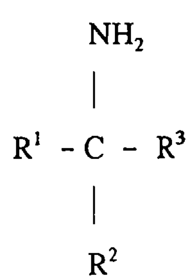

(I)

in der bedeuten

$R^1$ verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen,

$R^2$ und $R^3$ jeweils unabhängig voneinander Wasserstoff oder einen der unter $R^1$ genannten Reste, wobei für $R^3$ Wasserstoff besonders bevorzugt wird,

mit der Maßgabe, daß die Aminogruppe nicht direkt an einein Aromaten gebunden ist und für den Fall, daß $R^2$ und $R^3$ Wasserstoff sind, der verbleibende Rest $R^1$ einer der folgenden Substituenten ist

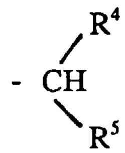

(7)

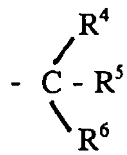

(8)

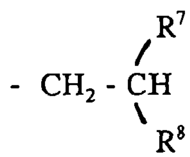

(9)

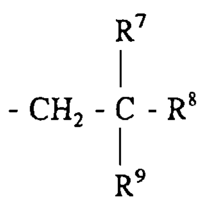

(10)

wobei die Reste

$R^4$ bis $R^9$ jeweils unabhängig voneinander die Bedeutung verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen haben, und

$R^1$ und $R^2$ einen gegebenenfalls substituierten cycloaliphatischen Ring mit bis zu 8 Kohlenstoffatomen bilden können, wobei $R^3$ dann ein Wasserstoffatom bedeutet, und

(A22) Aminen der Formel II

$$R^{11} - NH - R^{10} - NH - R^{11} \qquad (II)$$

worin

$R^{10}$ ein aliphatischer, cycloaliphatischer oder araliphatischer, gegebenenfalls durch Hydroxy-, Alkoxy- oder Halogen-Gruppen substituierter Kohlenwasserstoffrest mit 2 bis 30 Kohlenstoffatomen oder ein Oxyalkylenrest mit 1 bis 200 Oxyalkyleneinheiten und
$R^{11}$ unabhängig voneinander ein aliphatischer, cycloaliphatischer oder araliphatischer, gegebenenfalls durch Hydroxy-, Alkoxy- oder Halogen-Gruppen substituierter Kohlenwasserstoffrest mit 1 bis 20 Kohlenstoffatomen bedeuten,

mit der Maßgabe, daß mindestens ein direkt an das jeweilige Stickstoffatom gebundenes Kohlenwasserstoffatom ein sekundäres oder tertiäres ist, und

(A23) diprimären Diaminen der Formel III

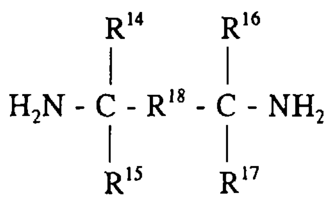
(III),

wobei

$R^{14}$ bis $R^{17}$ Wasserstoff oder eine Alkylgruppe mit 1 bis 8 Kohlenstoffatomen, und
$R^{18}$ eine direkte Bindung, eine lineare, verzweigte oder cyclische, gegebenenfalls substituierte Alkylengruppe oder eine Arylen- oder Heteroarylengruppe bedeuten,

mit der Maßgabe, daß mindestens einer der Reste $R^{14}$ bis $R^{17}$ eine Alkylgruppe ist, wenn $R^{18}$ eine direkte Bindung oder eine lineare Alkylengruppe ist; und $R^{14}$ mit $R^{16}$ oder $R^{18}$ und den verbindenden Atomen einen cycloaliphatischen, aromatischen oder heteroaromatischen Ring bilden können, und

mehrfunktionellen Isocyanaten (A3), die mindestens zwei Isocyanatgruppen pro Molekül enthalten, wobei der mit den Isocyanatgruppen verbundene mehrwertige Rest ausgewählt ist aus aromatischen, linearen, verzweigten oder cyclischen aliphatischen und aus gemischt aromatisch-aliphatischen Resten;

(B) gegebenenfalls 1,2-Epoxidverbindungen, die verschieden von denen gemäß (A1) sind und/oder die nicht umgesetzte Anteile der Verbindungen (A1) aus der Herstellung der Verbindungen (A) sind,

(C) Härtungsmitteln und

(D) gegebenenfalls weiteren Zusätzen.

2. Zusammensetzung nach Anspruch 1, dadurch gekennzeichnet, daß die Verbindungen (A1) einen spezifischen Epoxidgruppen-Gehalt von 2 000 bis 10 000 mmol/kg (Epoxidäquivalentgewichte von 100 bis 500 g/mol) aufweisen.

3. Zusammensetzung nach Anspruch 2, dadurch gekennzeichnet, daß die Verbindungen (A1) ausgewählt sind aus der Gruppe (A12) der Diglycidyläther von Bisphenol-A und Bisphenol-F.

4. Zusammensetzung nach Anspruch 1, dadurch gekennzeichnet, daß die Verbindungen (A1) ausgewählt sind aus der Gruppe (A11) der Polyoxyalkylenglykoldiglycidyläther.

5. Zusammensetzung nach Anspruch 4, dadurch gekennzeichnet, daß die Verbindungen (A11) Polyoxypropylenglykoldiglycidyläther sind.

6. Zusammensetzung nach Anspruch 1, dadurch gekennzeichnet, daß die Amine (A21) t-Alkylamine mit 4 bis 22 Kohlenstoffatomen sind.

**7.** Zusammensetzung nach Anspruch 1, dadurch gekennzeichnet, daß die Amine (A21) t-Alkylamine mit 12 bis 14 Kohlenstoffatomen sind.

**8.** Zusammensetzung nach Anspruch 1, dadurch gekennzeichnet, daß die Amine (A21) die Formel

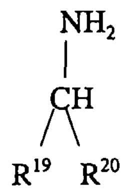

aufweisen,
in der $R^{19}$ und $R^{20}$ die Bedeutung von $R^1$ in Anspruch 1 haben oder $R^{19}$ und $R^{20}$ einen gegebenenfalls substituierten cycloaliphatischen Ring mit bis zu 8 Kohlenstoffatomen bilden können.

**9.** Zusammensetzung nach Anspruch 8, dadurch gekennzeichnet, daß als Amin (A21) 2-Aminobutan eingesetzt wird.

**10.** Zusammensetzung nach Anspruch 8, dadurch gekennzeichnet, daß als Amin (A21) Cyclohexylamin eingesetzt wird.

**11.** Zusammensetzung nach Anspruch 1, dadurch gekennzeichnet, daß als Amin (A21) 2-Äthylhexylamin eingesetzt wird.

**12.** Zusammensetzung nach Anspruch 1, dadurch gekennzeichnet, daß als mehrfunktionelle Isocyanate Diisocyanate eingesetzt werden.

**13.** Zusammensetzung nach Anspruch 1, dadurch gekennzeichnet, daß die Verbindungen (A) Umsetzungsprodukte sind aus Polyoxypropylenglykoldiglycidyläthern (A1), 2-Aminobutan (A2) und mehrfunktionellen Isocyanaten (A3), und die Verbindungen (B) ausgewählt sind aus der Gruppe der Diglycidyläther von Bisphenol-A und Bisphenol-F.

**14.** Zusammensetzung nach Anspruch 1, dadurch gekennzeichnet, daß als Härtungsmittel (C) Aminoäthylpiperazin eingesetzt wird.

**15.** Zusammensetzung nach Anspruch 1, dadurch gekennzeichnet, daß als Härtungsmittel eine Mischung aus Aminoäthylpiperazin und Nonylphenol und/oder Benzylalkohol verwendet wird.

**16.** Zusammensetzung nach Anspruch 1, dadurch gekennzeichnet, daß als Härtungsmittel (C) m-Xylylendiamin eingesetzt wird.

**17.** Zusammensetzung nach Anspruch 1, dadurch gekennzeichnet, daß als Härtungsmittel Isophorondiamin eingesetzt wird.

**18.** Zusammensetzung nach Anspruch 1, dadurch gekennzeichnet, daß als Mischungen m-Xylylendiamin und/oder Isophorondiamin und Benzylalkohol eingesetzt werden.

**19.** Zusammensetzung nach Anspruch 1, dadurch gekennzeichnet, daß die mehrfunktionellen Isocyanate (A3) in einer solchen Menge eingesetzt werden, daß pro 1 mol Epoxidgruppen in dem Epoxid-Amin-Addukt aus (A1) und (A2) 0,01 bis 0,625 mol Isocyanatgruppen in der Reaktionsmischung vorhanden sind.

**20.** Zusammensetzung nach Anspruch 1, dadurch gekennzeichnet, daß die mehrfunktionellen Isocyanate (A3) Diisocyanate sind.

**21.** Zusammensetzung nach Anspruch 1, dadurch gekennzeichnet, daß die mehrfunktionellen Isocyanate (A3) aromatische Isocyanate sind.

**22.** Zusammensetzung nach Anspruch 1, dadurch gekennzeichnet, daß die mehrfunktionellen Isocyanate (A3) Diisocyanate sind, bei denen ein Stoffmengenanteil von bis zu 15 % durch drei- und höherfunktionelle Isocyanate ersetzt ist.

**23.** Zusammensetzung nach Anspruch 1, dadurch gekennzeichnet, daß als Diisocyanat (A3) Toluylendiisocyanat eingesetzt wird.

**24.** Verwendung der Zusammensetzung nach Anspruch 1 als rißüberbrückende Beschichtung.

**25.** Verwendung der Zusammensetzung nach Anspruch 1 als Klebstoff-Zusatz.